# EUROPEAN PATENT APPLICATION

(11) **EP 4 075 010 A1**
(43) Date of publication of application: **19.10.2022**
(21) Application number: 19845904.2
(22) Date of filing: 11.12.2019
(51) Int. Cl.: F16F 9/02

(54) **DIE SEPARATOR CYLINDER, AND DIE FOR PRESSES**

(71) Applicant: Bikkean Global Services S.L.U., 01160 Aramaio (ES)
(72) Inventor: DEL TESO ELKORO, Iker, 01160 ARAMAIO (ES)
(74) Representative: Igartua, Ismael
(86) International application number: PCT/ES2019/070839
(87) International publication number: WO 2021/116504

(57) **Abstract**

Separator cylinder and a die with at least one separator cylinder. The cylinder (100) comprises a body (1), a piston (2) moveable through the body (1) between a rest position (2P1) and a compressed position, and a first chamber (1.1) and a second chamber delimited in the body (1). The cylinder (100) further comprises a main path communicating both chambers (1.1) to one another, a closing element (3) configured to close said main path in a closing position, and an rod (4) associated to the piston (2) with the freedom to move in the longitudinal direction (L), between a rest position (4P1) and an actuation position. The auxiliary rod (4) is configured to move the closing element (3) out of its closing position when it moves towards the actuation position.

## Description

### TECHNICAL FIELD

The present invention relates to die separator cylinders, which are used during the storage of the dies to keep them separated and prevent them from being damaged. The present invention also relates to dies for presses comprising at least one of said cylinders.

### PRIOR ART

Stamping tools are widely used to obtain stamped parts with various applications, such as motor vehicle components for example. These tools generally comprise two dies, an upper die and a lower die, which act as a punch (male) and a matrix (female). To prevent their premature wear or their damage when they are not being used, in particular to prevent the damage of the surfaces of both elements which cooperate with one another to obtain an end product during a stamping, although a punch and its corresponding matrix are stored together (one on top of the other), it is preferable for them to be separated from one another during said storage. To obtain this separation it is usual to use at least one spring element, for example, a gas cylinder, which is in charge of supporting the weight and keeping in position the tool which is arranged on top.

FR2949691A1 discloses a stamping tool comprising a matrix, a punch, and at least one wedge assembled in the matrix and which can be moved between a position in which said wedge cooperates with the punch to provide separation between the punch and the matrix for the storage of the stamping tool, even with some tools stacked on top of others, and a position in which the wedge allows the contact between the punch and the matrix for the operative functioning of said punch and said matrix. The tool further comprises a sensor for identifying in which of the two positions the wedge is arranged.

EP2314396A1 discloses a system for being able to maintain the separation between the punch and the matrix during their storage. The same includes a first gas cylinder supporting a determined weight, and a rigid support piston acting as a separator when this weight is exceeded during the storage.

US2007151699A1 discloses a separation cylinder adapted to be able to maintain the separation between the upper die and the lower die of a press during its storage. The cylinder comprises a moveable piston, a main chamber arranged below the piston and an auxiliary chamber communicated with the main chamber by means of two conduits: through a first conduit the gas present in the main chamber reaches the auxiliary chamber, while the gas passes from the auxiliary chamber to the main chamber through a second conduit constricted such that the time elapsing until the main chamber fills up with gas coming from the auxiliary chamber is delayed. Thus, there is a cylinder which with the sufficient force to keep the matrix and the punch separated when they are stored, while at the same time, thanks to the constriction, the expansion of the piston during the operations of the press is delayed and the piston is caused to affect a smaller run of the upper tool of the press when it descends, during said operations.

### DESCRIPTION OF THE INVENTION

The object of the invention is to provide a die separator cylinder and a die for presses, as defined in the claims.

A first aspect of the invention relates to a die separator cylinder. The cylinder comprises a main body defining an inner hollow; a piston adapted to move through the inner hollow in a longitudinal direction, between a rest position and a compression position, and comprising a base and a main rod extending longitudinally from the base; a first chamber delimited in the inner hollow of the main body, between said main body and the base of the piston; a second chamber delimited in the inner hollow of the main body, between said main body, the base and the main rod of the piston; and a main path fluidically communicating both chambers to one another.

The cylinder further comprises a closing element configured to close the main path in a closing position, and an associated auxiliary rod with freedom to move in the longitudinal direction to the piston, between a rest position in which it projects a determined distance from said main rod and an actuation position. The auxiliary rod is configured to push the closing element out of its closing position when it moves towards the actuation position, and the cylinder comprises a recovery element configured to cause the return of the closing element to its closing position when it stops being pushed by the auxiliary rod.

Thus, when acting upon the cylinder (on the auxiliary rod and the piston), the piston moves in the longitudinal direction towards a compression position, due to the fact that the main path between both chambers is enabled, whereas when said actuation is no longer exerted, said communication is closed and the piston does not carry out any additional movement.

A separator cylinder is associated to a pair dies (the upper die and the lower die), and its function is to maintain both dies of one and the same pair separated when they are not in, when they are stored. The cylinder is arranged in one of the dies, and with the dies stored, said cylinder supports the other die of the pair and prevents it from coming into contact with the die in which it is arranged.

When the die is operating in a press, the separator cylinder does not have to fulfill any function, and this is what is achieved with the cylinder of the invention, since it remains in the compression position even when there is no die acting on it. This is furthermore achieved with the design of the cylinder itself, so sensors, connections, electric signals or another type of elements which would make the installation more expensive and which would furthermore make it more vulnerable and complex to install are not necessary. A separator cylinder which only operates when appropriate is thus obtained, which involves lower wear and a greater service life.

A second aspect of the invention relates to a die for presses, comprising at least one die separator cylinder according to the first aspect of the invention.

These and other advantages and features of the invention will become evident in view of the figures and of the detailed description of the invention.

### DESCRIPTION OF THE DRAWINGS

Figure 1 shows in section an embodiment of the die separator cylinder of the invention, with the piston and the auxiliary rod in the respective rest position.
Figure 2 shows in section the die separator cylinder of Figure 1, with the piston in the compression position and the auxiliary rod in the actuation position.
Figure 3 shows the trajectory of the piston of the cylinder of Figure 1.
Figure 4 shows detail A- A of the die separator cylinder of Figure 1.

### DETAILED DESCRIPTION OF THE INVENTION

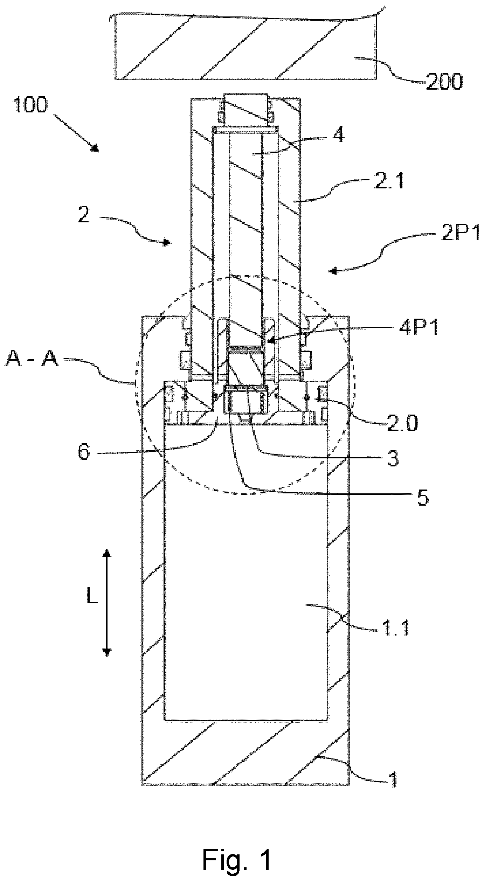

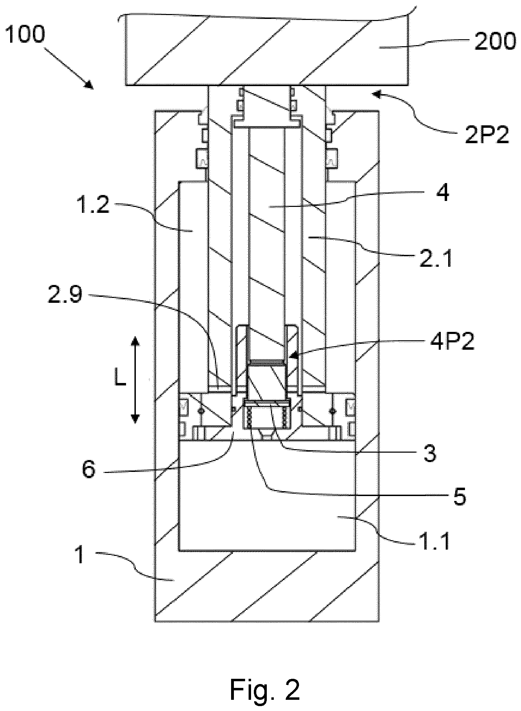

Figures 1 and 2 show an embodiment of the cylinder 100 of the invention, which is adapted to be used as a die separator. A cylinder 100 is associated to a pair of dies (an upper die 200 and a lower die), and is preferably joined to the lower die, such that it is associated to both dies both, when they are installed in a press and in normal operation and when they are separated from the press (stored). As it has been commented, when it is fulfilling the storage function a cylinder 100 has to be withstanding the force exerted by one of the dies, to prevent it from coming into contact with the other one.

The cylinder 100 comprises a main body 1 defining an inner hollow, a piston 2 adapted to move through the inner hollow in a longitudinal direction L between a rest position 2P1 (Figure 1) and a compression position 2P2 (Figure 2), a first chamber 1.1, a second chamber 1.2 and a main path fluidically communicating both chambers 1.1 and 1.2 to one another. In at least one of the chambers 1.1 and 1.2 there is a gas present.

When the cylinder 100 is arranged in a press, i.e. when the dies with which a cylinder 100 is associated are installed in a press, and the dies are open, the piston 2 of the cylinder 100 is in the rest position 2P1, such as that shown in Figure 1. When the upper die 200 descends, said upper die 200 comes into contact with the piston 2 and pushes it with its movement, causing its movement towards the compression position 2P2 in a longitudinal direction L.

The piston 2 comprises a base 2.0 and a main rod 2.1 extending longitudinally (in the longitudinal direction L) from the base 2.0, as shown in Figures 1 and 2. The first chamber 1.1 is delimited in the inner hollow of the main body 1, between said main body 1 and the base 2.0 of the piston 2 (below the base 2.0 of the piston 2), and the second chamber 1.2 is delimited in the inner hollow of the main body 1, between said main body 1, the base 2.0 and the main rod 2.1 of the piston 2 (above the base 2.0 of the piston 2).

The cylinder 100 further comprises a closing element 3 configured to close the main path in a closing position, preventing in that case the fluidic communication between the chambers 1.1 and 1.2 through said main path.

The cylinder 100 further comprises an auxiliary rod 4 which is associated with freedom of movement in the longitudinal direction L to the piston 2, between a rest position 4P1 in which its projects a determined distance from said main rod 2.1 (Figure 1) and an actuation position 4P2 in which it preferably does not project from said main rod 2.1 (Figure 2). This determined distance allows the upper die 200 to come into contact before with the auxiliary rod 4 than with the piston 2, a movement of said auxiliary rod 4 with respect to the piston 2 being possible to be caused.

The auxiliary rod 4 is configured to push the closing element 3 out of its closing position when it moves towards the actuation position 4P2, such that when the upper die 200 causes the movement of the piston 2, the main path is enabled because previously the closing element 3 has already been moved out of its closing position by the auxiliary rod. The cylinder 100 further comprises a recovery element 5, preferably a spring, configured to cause the return of the closing element 3 to its closing position when it is no longer pushed by the auxiliary rod 4. When the auxiliary rod 4 moves towards the actuation position 4P2 it pushes the closing element 3, and the closing element 3 thus moves in the same direction as the auxiliary rod 4, leaving its closing position and compressing the spring. When the auxiliary rod 4 stops pushing the closing element 3, the spring attempts to recover its position causing the move of the closing element 3 towards its closing position. Thus, the closing element 3 is in its closing position when the auxiliary rod 4 is in its rest position 4P1 (regardless of the position of the piston 2).

The operation of the cylinder 100 is explained below, starting from a situation in which the dies associated to a cylinder 100 are installed in a press and open, and in which the piston 2 and the auxiliary rod 4 of said cylinder 100 are in their respective rest position 2P1 and 4P1 (situation shown in Figure 1).

When the upper die 200 descends, the movement of the piston 2 is caused towards the compression position 2P2, in the longitudinal direction L. But, firstly, the upper die 200 comes into contact with the auxiliary rod 4 and moves it in the longitudinal direction L without the piston 2 being moved. This is so until the auxiliary rod 4 is, preferably, flush with the main rod 2.1 (once it has moved the determined distance with respect to the piston 2), from which moment the auxiliary rod 4, the piston 2 moves simultaneously, although it would be sufficient with the necessary movement of the auxiliary rod 4 for the closing element 3 to leave its closing position.

During the movement of the auxiliary rod 4 with respect to the piston 2, i.e., during the movement of the auxiliary rod 4 from its rest position 4P1 to its actuation position 4P2, the auxiliary rod 4 moves in the longitudinal direction L to the closing element 3, which moves outside the closing position, the communication between the chambers 1.1 and 1.2 through the main path opening up. Thus, when the upper die 200 causes the movement of the piston 2, the gas present in the first chamber 1.1 flows towards the second chamber 1.2 through said main path, as said piston 2 moves in the longitudinal direction L (as it descends).

When the upper die 200 is removed, the ascending force exerted by the recovery element 5 on the closing element 3 is greater than the descending force exerted on said closing element 3, and said recovery element 5 pushes the closing element 3 towards its closing position, such that the communication between the two chambers 1.1 and 1.2 is closed and the auxiliary rod 4 returns to its rest position 4P1, the main path being closed. Since the communication between both chambers 1.1 and 1.2 is closed, the gas of the second chamber 1.2 can therefore not return to the first chamber 1.1 and the piston 2 does not return to its rest position 2P1, remaining in the compression position 2P2 (or slightly moved with respect to said compression position 2P2).

When the upper die 200 again descends in the following press cycle, the mentioned process is repeated, with the difference that the piston 2 either remains in the compression position 2P2 or moves slightly until said compression position 2P2 (but not from its rest position 2P1). A cylinder 100 has thus been achieved which does not undergo wear (or virtually does not undergo wear), during the operation of the dies to which it is associated, in spite of fulfilling its function during storage of the dies with which it is associated as is explained below.

In the last press cycle, the upper die 200 is released from the press when it is supported in the cylinder 100. The cylinder 100 and the upper die 200 being thus, the auxiliary rod 4 remains in its actuation position 4P2, due to the weight of the upper die 200, so the main path remains open. The cylinder 100 is tared such that it exerts an upward greater than that produced by the weight of the upper die 200 downwards, such that the piston 2 moves towards its rest position 2P1 (but the auxiliary rod 4 remains in its actuation position 4P2, the main path remaining open). Being thus, the dies are separated from the press and are stored, such that the cylinder 100 withstands the force that the upper die 200 exerts on its, and keeps said upper die 200 separated from the lower die at all times. Tared must be interpreted as the maximum pressure said cylinder 100 can withstand or exert, which depends on the pressure at which the gas can be in the first chamber 1.1. Thus, the cylinder 100 fulfills its function of keeping the dies separated in storage, while at the same it does not work (and therefore does not undergo wear) when the dies are installed and operative in a press.

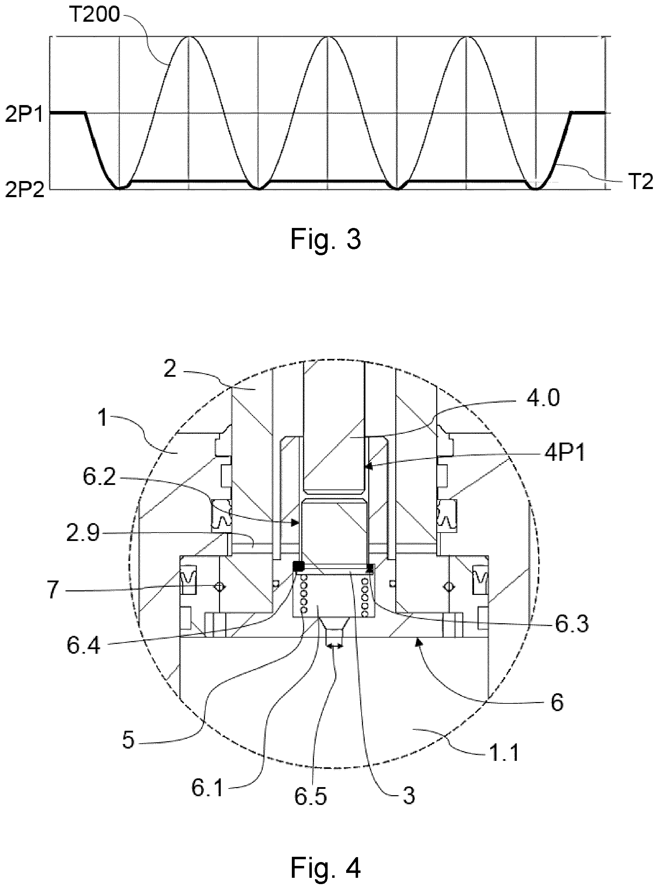

Figure 3 shows the trajectory T2 of the piston 2 during the operation of a press, in comparison with the move T200 of the upper die 200, the last step reflecting the storage situation.

The piston 2 is hollow, and the auxiliary rod 4 and the closing element 3 are housed in said hollow, as shown in Figures 1 and 2, and are adapted to move longitudinally through said hollow with respect to the piston 2. The closing element 3 is facing the auxiliary rod 4, such that when the auxiliary rod 4 is moved towards its actuation position 4P2 it pushes the closing element 3, forcing it to leave its closing position.

As has been mentioned, the recovery element 5 preferably comprises a spring (although any other element with elastic or recovery properties can be used), and is associated to the piston 2 by a first end and to the closing element 3 by a second end. Being associated with the piston 2 means that that end is integral with said piston 2, moving together with said piston 2 when the latter moves, or remaining static if the piston 2 remains static. The recovery element 5 is such that it is compressed when said closing element 3 moves out of said closing position. When the auxiliary rod 4 moves towards its actuation position 4P2 it pushes the closing element 3, said auxiliary rod 4 moves with respect to the piston 2, such that the end of the recovery element 5 associated to the piston 2 remains static (or with a relative movement with respect to the auxiliary rod 4 and to the closing element 3), for which reason said recovery element 5 is compressed.

The cylinder 100 preferably comprises a support 6 housed in the hollow of the piston 2 (not projecting from it) and fixed to the piston 2, moving integrally with said piston 2 or remaining static integrally with said piston 2. The recovery element 5 is fixed to said support 6, at its ends associated to the piston 2. The support 6 is preferably hollow, and the recovery element 5 and the closing element 3 are housed in said hollow. The central shaft of the hollow and the central shaft of the piston 2 are preferably the same shaft and are preferably hollow with a circular section. The support 6 facilitates the assembly of the cylinder 100, with the advantages that this entails.

With reference to Figure 4, the hollow of the support 6 is divided into at least two contiguous areas 6.1 and 6.2 in the longitudinal direction L, the first area 6.1 being fluidically communicated with the first chamber 1.1 and the second area 1.2 being fluidically communicated with the second chamber 6.2 through a through hole 2.9 of the piston 2 (of the main rod 2.1 of said piston 2). While in the closing position, the closing element 3 prevents the communication between both areas 6.1 and 6.2, the communication between both chambers 1.1 and 1.2 thus being prevented. Preferably, the recovery element 5 is housed in the first area 6.1, and the closing element 3 is also housed in said first area 6.1, at least partially.

The second area 6.2 comprises a section smaller than the section of the first area 6.1, at least in the region of communication between both areas 6.1 and 6.2, and the support 6 comprises a wall 6.3 causing said change of section. The closing element 3 presses on said wall 6.3 in its closing position, pressed by the recovery element 5. The cylinder can additionally comprise a gasket 6.4 or a similar element associated with the closing element 3, so that said closing element 3 closes in a sealed manner the main path when it is in the closing position. The diameter of the closing element 3 is smaller than the diameter of the first area 6.1, such that the passage of a fluid is allowed through said first area 6.1 when the closing element 3 is not in its closing position.

The length of the second area 6.2 can be such that the auxiliary rod 4 comprises an end 4.0 housed in the hollow of the support 6 belonging to the second area 6.2, with the freedom to move in the longitudinal direction L, it thus being ensured that the auxiliary rod 4 will always act on the closing element 3 when appropriate. Said end 4.0 is what acts against the closing element 3, to move it from its closing position.

The closing element 3 is preferably separated from the auxiliary rod 4 when said auxiliary rod 4 is in the rest position 4P1 (Figure 1), said separation being smaller than the determined distance that said auxiliary rod 4 projects from the piston 2. This allows a small movement of the auxiliary rod 4 with respect to the piston 2, which does not entail a movement of the closing element 3, offering a greater security since, for example, with accidental blows on the auxiliary rod 4, the opening of the main path is not caused.

The piston 2 preferably comprises at least one through hole in the base 2.0, fluidically communicating the first chamber 1.1 with the second chamber 1.2, and the cylinder 100 comprises a one-way valve 7 housed in said through hole, which allows the fluidic communication from the first chamber 1.1 towards the second chamber 1.2 through the through hole but not in the opposite direction. Thus, when the upper die 200 descends and causes a descent of the piston 2, the gas present in the first chamber 1.1 can flow through the through hole towards the second chamber 1.2, in addition to through the main path, which allows a compression of the cylinder 100 in accordance with the movement of the upper die 200.

However, when the upper die 200 ascends and causes, at least initially, an ascent of the piston 2, the fluid can only flow from the second chamber 1.2 to the first chamber 1.1 through the main path (and not through the through hole, which is closed with the one-way valve 7). The support 6 comprises in the first area 6.1 a section 6.5 delimiting the flow of gas between the two chambers 1.1 and 1.2 through the main path, and the dimensions of said section 6.5 are adjusted to the desired rising speed for the piston 2. It can thus be ensured in a simple manner, due to the fact that during the rise of the piston 2 the gas can only flow between both chambers 1.1 and 1.2 and to a suitable selection of the section 6.5, that the rising speed of the piston 2 is lower than the rising speed of the upper die 200, it being ensured that said piston 2 is no longer actuated by said the upper die 200 during its ascending movement and that therefore the main path is closed (as has been explained above). When the main path is closed, the piston 2 does not return to its rest position 2P1 together with the upper die 200, remaining in the compression position 2P2.

A second aspect relates to a die for presses comprising at least one cylinder 100 such as the one described, in any of its embodiments and/or configurations, although preferably the die has a plurality of associated cylinders 100.

## Claims

1. Die separator cylinder comprising a main body (1) defining an inner hollow; a piston (2) adapted to move through the inner hollow in a longitudinal direction (L) between a rest position (2P1) and a compression position (2P2) and comprising a base (2.0) and a main rod (2.1) extending longitudinally from the base (2.0); a first chamber (1.1) delimited in the inner hollow of the main body (1) between said main body (1) and the base (2.0) of the piston (2); a second chamber (1.2) delimited in the inner hollow of the main body (1) between said main body (1), the base (2.0) and the main rod (2.1) of the piston (2);and a main path fluidically communicating both chambers (1.1, 1.2) to one another; **characterized in that** the cylinder (100) further comprises a closing element (3) configured to close the main path in a closing position; an auxiliary rod (4) which is associated to the piston (2) with freedom of movement in the longitudinal direction (L) between a rest position (4P1) in which it projects a determined distance from said main rod (2.1) and an actuation position (4P2) and which is configured to push the closing element (3) out of its closing position when it move towards the actuation position (4P2); and a recovery element (5) configured to cause the return of the closing element (3) to its closing position when said closing element (3) is no longer pushed by the auxiliary rod (4).

2. Cylinder according to claim 1, wherein the piston (2) is hollow and the auxiliary rod (4) and the closing element (3) are housed in said hollow, the auxiliary rod (4) and the closing element (3) being adapted to move longitudinally through said hollow.

3. Cylinder according to claim 2, wherein the closing element (3) is facing the auxiliary rod (4), said auxiliary rod (4) being adapted to push said closing element (3) during its movement towards the actuation position (4P2).

4. Cylinder according to claim 3, wherein the recovery element (5) comprises a spring extending in the longitudinal direction (L) and which is associated by a first end with the piston (2) and by a second end with the closing element (3), said spring being in an extended position when the closing element (3) is in the closing position and being configured to compress when said closing element (3) moves out of said closing position.

5. Cylinder according to claim 4, wherein the recovery element (5) is housed in the hollow of the piston (2).

6. Cylinder according to claim 5, wherein the piston (2) comprises a support (6) housed in the hollow of said piston (2) and fixed to said piston (2), the end of the recovery element (5) being associated with the piston (2) fixed to said support (6).

7. Cylinder according to claim 6, wherein the support (6) is hollow and said hollow is divided into a first area (6.1) fluidically communicated with the first chamber (1.1) and a second area (6.2) fluidically communicated with the second chamber (1.2), the closing element being configured to close the communication between said first area (6.1) and said second area (6.2) in the closing position.

8. Cylinder according to claim 7, wherein the second area (6.2) comprises a section smaller than the section of the first area (6.1), at least in the region of communication between both areas (6.1, 6.2), the support (6) comprising a wall (6.3) in said region of communication which causes said change of section and the closing element (3) being supported on said wall (6.3) in its closing position.

9. Cylinder according to claim 8, wherein the auxiliary rod (4) comprises an end (4.0) acting against the closing element (3), moving it, when it moves towards the actuation position (4P2), said end (4.0) being housed in the housing (6.1) of the support (6).

10. Cylinder according to any of claims 7 to 9, wherein the support (6) comprises, in the first area (6.1), a section (6.5) delimiting the flow of gas between the two chambers (1.1, 1.2) through the main path, the dimensions of said section (6.5) depending on the desired rising speed for the piston (2).

11. Cylinder according to any of claims 1 to 10, wherein the closing element (3) is separated from the auxiliary rod (4) when said auxiliary rod (4) is in the rest position (4P1), said separation being smaller than the distance that said auxiliary rod (4) projects from the piston (2).

12. Cylinder according to any of claims 1 to 11, comprising a sealing gasket (6.4) associated with the closing element (3), so that said closing element (3) closes in a sealed manner the main path when it is in the closing position.

13. Cylinder according to any of claims 1 to 12, wherein the piston (2) comprises a through hole in the base (2.0), fluidically communicating the first chamber (1.1) and the second chamber (1.2) through an auxiliary path, the cylinder (100) comprising a one-way valve (7) housed in said hole, which allows the fluidic communication from the first chamber (1.1) towards the second chamber (1.2) through the auxiliary path but not in the opposite direction.

14. Die for presses, **characterized in that** it comprises at least one die separator cylinder (100) according to any of the previous claims.
